# EUROPEAN PATENT SPECIFICATION

(11) **EP 2 589 527 B1**
(45) Date of publication and mention of the grant of the patent: **03.09.2014**
(21) Application number: 12190512.9
(22) Date of filing: 30.10.2012
(51) Int. Cl.: B62J 9/00, E05B 47/00, E05D 11/10

(54) **Locking hinge for motorcycle accessories**
Verriegelungsscharnier für Motorradzubehör
Charnière de verrouillage pour accessoires de motocycles

(30) Priority: 04.11.2011 IT MI20110348 U
(43) Date of publication of application: 08.05.2013
(73) Proprietor: Meroni F.lli S.R.L., 23843 Dolzago (LC) (IT)
(72) Inventor: Meroni, Maria Luisa, 23846 Garbagnate Monastero (LC) (IT)
(74) Representative: Ottazzo, Marco Francesco Agostino

(56) References cited:
- DE-A1- 4 418 606
- DE-U1-202007 001 804
- GB-A- 2 282 636

## Description

The present invention relates to a case for motorcycles provided with a locking hinge.

The use on motorcycles in general of top boxes or cases adapted to accommodate baggage, helmets or other accessories is well known. Said cases are usually applied, in a removable or non-removable manner, to the rear of the motorcycle and normally comprise a bottom, that is equipped with means for its coupling to the motorcycle frame and a cover hinged to said bottom. Locking means of the lid with respect to the bottom thereof complete the motorcycle cases of the prior art and make them secure under any usage condition.

One type of locking means of the lid with respect to the bottom of a motorcycle case for example consists of a hinge formed by a bottom plate, to be affixed to the bottom of the case, onto which a hook, adapted to engage with the lid so as to block it in a closed position on the bottom, is rotatably mounted by means of one or more hinge pins.

One drawback of this type of hinge is due to the fact that the mobile hook, when not equipped with locks or other blockage means with respect to the fixed plate, can accidentally rotate and disengage from the lid, thus causing the undesired opening of the case. Document DE 20 2007 001 804 U1 shows a case according to the preamble of claim 1.

The general aim of the present invention is therefore that of producing a case with a locking hinge intended for use on motorcycles, that is able to overcome the aforementioned drawbacks of the prior art in an extremely simple, economic and particularly functional manner.

In detail, one aim of the present invention is that of producing a case with a locking hinge that is able to guarantee a more stable and secure hooking than the locking hinges of the prior art.

Another aim of the invention is that of producing a case with a locking hinge that is in any case simple to operate as is the case in the locking hinges of the prior art.

These aims according to the present invention are achieved by a case for motorcycles provided with a locking hinge, as claimed in claim 1.

Further characteristics of the invention are highlighted in the dependant claims, which are an integral part of the present description.

The characteristics and the advantages of a case provided with a locking hinge according to the present invention shall become clearer from the following description, given by way of a non-limiting example, in relation to the accompanying schematic drawings, wherein:
Figure 1 is a perspective view of a preferred embodiment of the locking hinge according to the present invention, shown in open or unhooked configuration;
Figure 2 is a front view of the locking hinge of Figure 1, shown in open or unhooked configuration; and
Figure 3 is a perspective view of the locking hinge of Figure 1, shown in closed or hooked configuration.

With reference to the figures, there is shown a preferred embodiment of the locking hinge according to the present invention, globally indicated by the reference number 10. The hinge 10 comprises a bottom part 12, to be affixed to a first component 14 by means of one or more rivets 16, screws or other analogous fastening means, and a hook 18, hinged to said bottom part 12 and provided with a hook-shaped end portion 20 for hooking onto a second component (not shown) and blocking it in a closed position on the first component 14. The first component 14 and the second component consist of the two half-shells of a case for motorcycles.

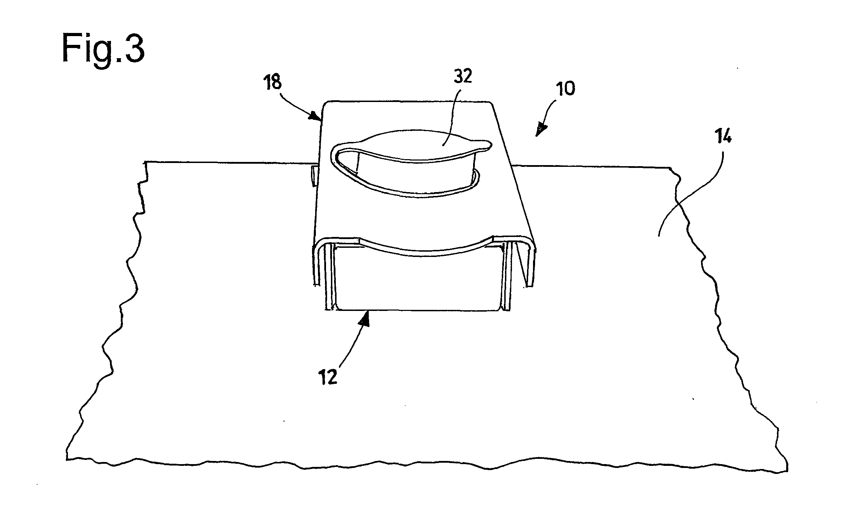

According to the invention, the bottom part 12 and the hook 18 are equipped with magnetic coupling means, which allow, in the closed or hooked configuration of the hinge 10, when said bottom part 12 and said hook 18 are arranged in parallel facing each other (figure 3), firm and secure hooking of the second component onto the first component 14 to be maintained.

The magnetic coupling means preferably consist of a magnet 22, that is affixed to the inner surface of the bottom part 12, and a metal backing plate 24, that is affixed to the inner surface of the hook 18 so as to face the magnet 22 when said bottom part 12 and said hook 18 are arranged in parallel facing each other. In this way, the magnet 22 is able to exert its force on the metal backing plate 24 in the closed or hooked configuration of the hinge 10, shown in Figure 3.

According to one preferred embodiment of the hinge 10 according to the present invention, the magnet 22 can be provided in its lower part with a threaded shank that is inserted, by means of a male screw-female screw coupling, into a self-locking nut 26 that is integral to the inner surface of the bottom part 12. Analogously, the metal backing plate 24 can be affixed to the inner surface of the hook 18 by means of a screw 28 and a respective nut 30. Alternatively, in the case in which the hook 18 is made of a metal material, the metal backing plate 24 may not be envisaged, or may be affixed to the inner surface of said hook 18 by welding.

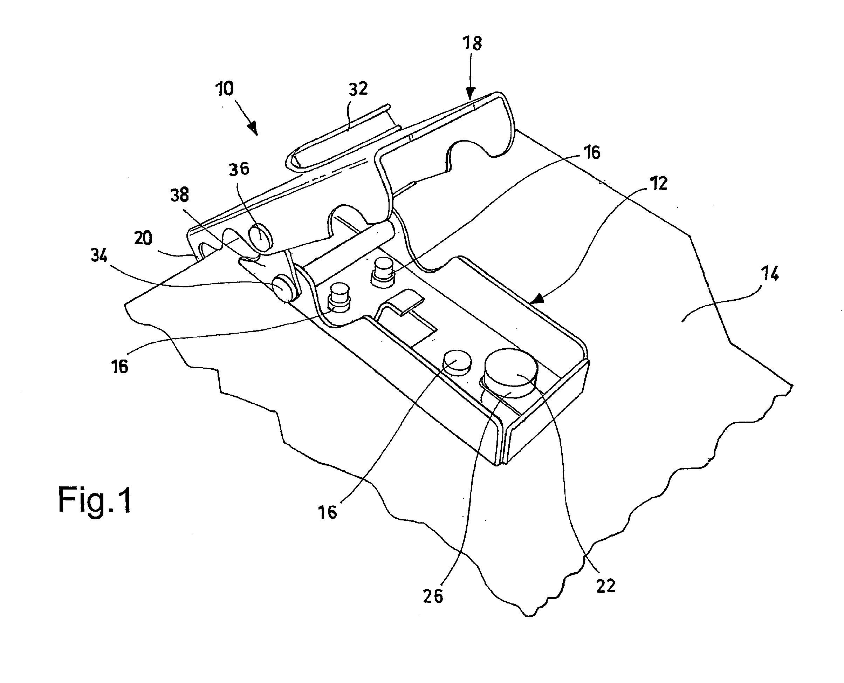

As shown in Figures 1 and 3, a cap 32 that is able to cover the head of the screw 28, can be applied to the outer surface of the hook 18 for aesthetic and safety reasons. For better protection against galvanic corrosion, the metal backing plate 24 can be made of galvanised iron.

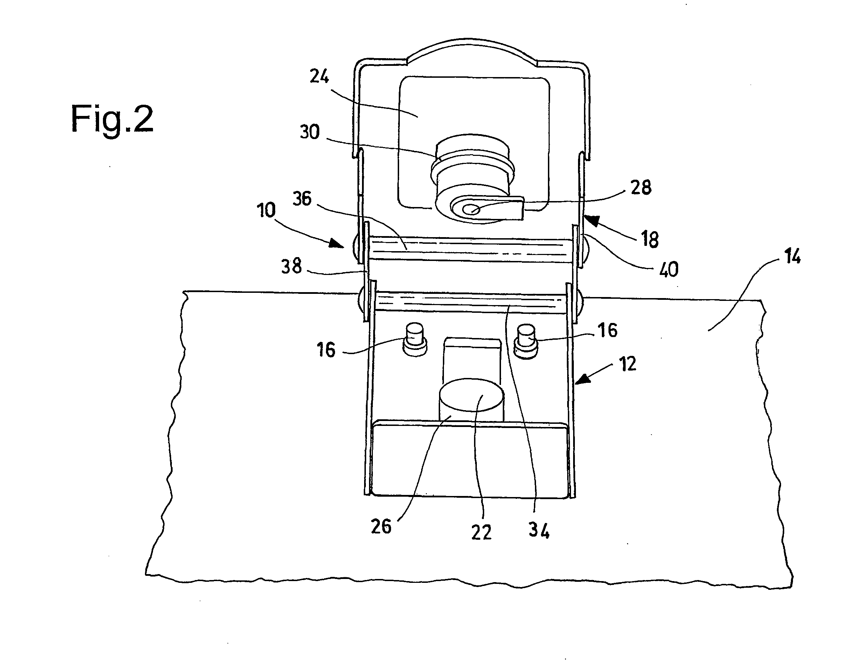

As shown in Figures 1 and 2, the hinging of the bottom part 12 and the hook 18 can be achieved by means of a pair of pins 34 and 36 that are parallel to each other and are jointed by means of a pair of lateral plates 38 and 40, wherein a first pin 34 is constrained to the bottom part 12 and the second pin 36 is constrained to the hook 18.

It has thus been seen that the case provided with the locking hinge according to the present invention achieves the aims as set out above.

The case provided with the locking hinge thus conceived is in any case susceptible to numerous modifications and variants, all falling under the same innovative concept. In practice, any materials as well as any shapes and dimensions can be used depending on the technical requirements.

The scope of protection of the invention is therefore defined by the accompanying claims.

## Claims

1. Case for motorcycles provided with a first component that consists of the first half-shell (14) of said case, a second component that consists of the second half-shell of said case and a locking hinge (10) of the type comprising a bottom part (12), provided with fastening means (16) to be affixed to the first component (14), and a hook (18), that is hinged to said bottom part (12) and is provided with a hook-shaped end portion (20) for hooking the second component and blocking it in a closed position on the first component (14), **characterised in that** the bottom part (12) and the hook (18) are equipped with magnetic coupling means (22, 24) that allow, in the closed or hooked configuration of the hinge (10), when said bottom part (12) and said hook (18) are arranged in parallel facing each other, to maintain a firm and secure hooking of the second component onto the first component (14).

2. Case for motorcycles according to claim 1, **characterised in that** the magnetic coupling means consist of a magnet (22), affixed to the inner surface of the bottom part (12), and a metal backing plate (24), affixed to the inner surface of hook (18) so as to face the magnet (22) when said bottom part (12) and said hook (18) are arranged in parallel facing each other, so that the magnet (22) is able to exert its force on the metal backing plate (24) in the closed or hooked configuration of the hinge (10).

3. Case for motorcycles according to claim 2, **characterised in that** the magnet (22) is provided, in its lower part, with a threaded shank which is inserted, by means of a male screw-female screw coupling, into a self-locking nut (26) that is integral to the inner surface of the bottom part (12).

4. Case for motorcycles according to claims 2 or 3, **characterised in that** the metal backing plate (24) is affixed to the inner surface of the hook (18) by means of a screw (28) and a respective nut (30).

5. Case for motorcycles according to claim 4, **characterised in that** a cap (32) able to cover the head of the screw (28) is applied to the outer surface of the hook (18) for aesthetic and safety reasons.

6. Case for motorcycles according to claim 2 or 3, **characterised in that** the hook (18) is made of a metal material and the metal backing plate (24) is affixed to the inner surface of the hook (18) by means of welding.

7. Case for motorcycles according to any one of claims 2 to 6, **characterised in that** the metal backing plate (24) is made of galvanised iron for better protection against galvanic corrosion.

8. Case for motorcycles according to any one of the preceding claims, **characterised in that** the hinging between the bottom part (12) and the hook (18) is achieved by means of a pair of pins (34, 36) that are parallel to each other and articulated by means of a pair of lateral plates (38, 40), wherein a first pin (34) is constrained to the bottom part (12) and the second pin (36) is constrained to the hook (18).

9. Case for motorcycles according to any one of the preceding claims, **characterised in that** the fastening means (16) of the bottom part (12) onto the first component (14) consist of screws or rivets.

## Patentansprüche

1. Motorradkoffer, der mit einer ersten Komponente, die aus der ersten Halbschale (14) des Koffers besteht, einer zweiten Komponente, die aus der zweiten Halbschale des Koffers besteht, und einem Verriegelungsscharnier (10) des Typs versehen ist, der ein Unterteil (12), das mit Befestigungsmitteln (16) zur Befestigung an der ersten Komponente (14) versehen ist, und einen Haken (18) umfasst, der an das Unterteil (12) angelenkt und mit einem hakenförmigen Endabschnitt (20) versehen ist, um die zweite Komponente zu verhaken und sie in einer geschlossenen Stellung auf der ersten Komponente (14) zu blockieren, **dadurch gekennzeichnet, dass** das Unterteil (12) und der Haken (18) mit magnetischen Kopplungsmitteln (22, 24) versehen sind, die es ermöglichen, in der geschlossenen oder verhakten Konfiguration des Scharniers (10), wenn das Unterteil (12) und der Haken (18) parallel einander zugewandt angeordnet sind, eine feste und sichere Verhakung der zweiten Komponente auf der ersten Komponente (14) aufrechtzuerhalten.

2. Motorradkoffer nach Anspruch 1, **dadurch gekennzeichnet, dass** die magnetischen Kopplungsmittel aus einem Magneten (22), der an der Innenfläche des Unterteils (12) befestigt ist, und einer Gegenplatte (24) aus Metall bestehen, die so an der Innenfläche des Hakens (18) befestigt ist, dass sie dem Magneten (22) zugewandt ist, wenn das Unterteil (12) und der Haken (18) parallel einander zugewandt angeordnet sind, so dass der Magnet (22) in der geschlossenen oder verhakten Konfiguration des Scharniers (10) seine Kraft auf die Gegenplatte (24) aus Metall ausüben kann.

3. Motorradkoffer nach Anspruch 2, **dadurch gekennzeichnet, dass** der Magnet (22) in seinem unteren Teil mit einem Gewindeschaft versehen ist, der mittels einer Schraube-Mutter-Verbindung in eine selbstsichernde Mutter (26) eingesetzt ist, die einstückig mit der Innenfläche des Unterteils (12) ist.

4. Motorradkoffer nach Anspruch 2 oder 3, **dadurch gekennzeichnet, dass** die Gegenplatte (24) aus Metall mit einer Schraube (28) und einer entsprechenden Mutter (30) an der Innenfläche des Hakens (18) befestigt ist.

5. Motorradkoffer nach Anspruch 4, **dadurch gekennzeichnet, dass** aus ästhetischen und sicherheitstechnischen Gründen eine Kappe (32) an der Außenfläche des Hakens (18) angebracht ist, die geeignet ist, den Kopf der Schraube (28) zu bedecken.

6. Motorradkoffer nach Anspruch 2 oder 3, **dadurch gekennzeichnet, dass** der Haken (18) aus einem Metallwerkstoff besteht und die Gegenplatte (24) aus Metall durch Schweißen an der Innenfläche des Hakens (18) befestigt ist.

7. Motorradkoffer nach einem der Ansprüche von 2 bis 6, **dadurch gekennzeichnet, dass** die Gegenplatte (24) aus Metall zum besseren Schutz gegen galvanische Korrosion aus verzinktem Eisen besteht.

8. Motorradkoffer nach einem der vorhergehenden Ansprüche, **dadurch gekennzeichnet, dass** die Anlenkung zwischen dem Unterteil (12) und dem Haken (18) mit einem Paar von Zapfen (34, 36) realisiert ist, die parallel zueinander und mittels eines Paars von Seitenplatten (38, 40) angelenkt sind, wobei ein erster Zapfen (34) am Unterteil (12) angebracht ist und der zweite Zapfen (36) am Haken (18) angebracht ist.

9. Motorradkoffer nach einem der vorhergehenden Ansprüche, **dadurch gekennzeichnet, dass** die Mittel (16) für die Befestigung des Unterteils (12) auf der ersten Komponente (14) aus Schrauben oder Nieten bestehen.

## Revendications

1. Coffre pour motocycles munie d'un premier composant qui comprend la première demi-coquille (14) dudit coffre, d'un deuxième composant qui comprend la deuxième demi-coquille dudit coffre et une charnière de verrouillage (10) du type comprenant une partie inférieure (12), munie de moyens de fixation (16) destinés à être apposés sur le premier composant (14) et un crochet (18), qui est articulé à ladite partie inférieure (12) et est pourvu d'une portion d'extrémité en forme de crochet (20) pour accrocher le deuxième composant et le bloquer dans une position fermée sur le premier composant (14), **caractérisé en ce que** la partie inférieure (12) et le crochet (18) sont équipés de moyens d'accouplement magnétiques (22, 24) qui permettent, dans la configuration fermée ou accrochée de la charnière (10), quand ladite partie inférieure (12) et ledit crochet (18) sont disposés en parallèle l'une face à l'autre, de maintenir un accrochage ferme et sûr du deuxième composant sur le premier composant (14).

2. Coffre pour motocycles selon la revendication 1, **caractérisé en ce que** les moyens d'accouplement magnétiques comprennent un aimant (22), apposé sur la surface intérieure de la partie inférieure (12), et une plaque d'appui métallique (24), apposée sur la surface intérieure du crochet (18) de manière à faire face à l'aimant (22) quand ladite partie inférieure (12) et ledit crochet (18) sont disposés en parallèle l'une face à l'autre, de manière que l'aimant (22) soit en mesure d'exercer sa force sur la plaque d'appui métallique (24) dans la configuration fermée ou accrochée de la charnière (10).

3. Coffre pour motocycles selon la revendication 2, **caractérisé en ce que** l'aimant (22) est muni, dans sa partie inférieure, d'une tige filetée qui est insérée, au moyen d'un accouplement vis mâle-vis femelle, dans un écrou autobloquant (26) qui est partie intégrale de la surface intérieure de la partie inférieure (12).

4. Coffre pour motocycles selon les revendications 2 ou 3, **caractérisé en ce que** la plaque d'appui métallique (24) est apposée sur la surface intérieure du crochet (18) au moyen d'une vis (28) et d'un écrou respectif (30).

5. Coffre pour motocycles selon la revendication 4, **caractérisé en ce qu'**un capuchon (32) adapté pour couvrir la tête de la vis (28) est appliqué à la surface extérieure du crochet (18) pour des raisons esthétiques et de sécurité.

6. Coffre pour motocycles selon la revendication 2 ou 3, **caractérisé en ce que** le crochet (18) est constitué d'un matériau métallique et la plaque d'appui métallique (24) est apposée sur la surface intérieure du crochet (18) au moyen d'une soudure.

7. Coffre pour motocycles selon l'une quelconque des revendications 2 à 6, **caractérisé en ce que** la plaque d'appui métallique (24) est constituée de fer galvanisé pour une meilleure protection contre la corrosion galvanique.

8. Coffre pour motocycles selon l'une quelconque des revendications précédentes, **caractérisé en ce que** la charnière entre la partie inférieure (12) et le crochet (18) est obtenue au moyen d'une paire de goupilles (34, 36) qui sont parallèles l'une à l'autre et articulées au moyen d'une paire de plaques latérales (38, 40), dans lequel une première goupille (34) est fixée à la partie inférieure (12) et la deuxième goupille (36) est fixée au crochet (18).

9. Coffre pour motocycles selon l'une quelconque des revendications précédentes, **caractérisé en ce que** les moyens de fixation (16) de la partie inférieure (12) sur le premier composant (14) comprennent des vis ou des rivets.
